(19) **Europäisches Patentamt / European Patent Office / Office européen des brevets**

(11) **EP 2 293 101 B1**

(12) **FASCICULE DE BREVET EUROPEEN**

(45) Date de publication et mention
de la délivrance du brevet:
**11.02.2015 Bulletin 2015/07**

(51) Int Cl.:
**G01S 13/91** *(2006.01)*  **G01S 13/93** *(2006.01)*
**G01S 13/94** *(2006.01)*  **G01S 13/95** *(2006.01)*

(21) Numéro de dépôt: **10174431.6**

(22) Date de dépôt: **27.08.2010**

(54) **Dispositif radar aeroporté multifonction à large bande de large couverture angulaire permettant la détection et le pistage**

Breitbandes multifunktionales Flugzeugradar mit breiten Abdeckungswinkel zur Erfassung und Zielverfolgung

Airborne multifunction wideband radar system with a large angular coverage for detection and tracking

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **04.09.2009 FR 0904224**

(43) Date de publication de la demande:
**09.03.2011 Bulletin 2011/10**

(73) Titulaire: **Thales**
**92200 Neuilly Sur Seine (FR)**

(72) Inventeurs:
• **Garrec, Patrick**
  **33700, MERIGNAX (FR)**

• **Cornic, Pascal**
  **29200, BREST (FR)**
• **Kemkemian, Stéphane**
  **75014, PARIS (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2008/134815**     **US-A- 4 370 656**
**US-A- 4 746 924**     **US-B1- 6 311 108**

**Description**

La présente invention concerne un dispositif radar aéroporté multifonction à large bande de large couverture angulaire permettant la détection et le pistage pour une fonction de détection et évitement d'obstacles. Elle s'applique notamment au domaine des radars aéroportés, et plus particulièrement au domaine des radars permettant la réalisation d'une fonctionnalité de détection et évitement d'obstacles, habituellement désignée selon la terminologie anglo-saxonne "Sense and Avoid".

Des véhicules aériens à pilotage assisté, voire des véhicules aériens sans pilote, communément désignés par l'acronyme UAV issu de la terminologie anglo-saxonne "Unmanned Aircraft Vehicles", ou encore par le terme "drones", circulent actuellement dans des zones ségréguées. Cependant l'espace de Circulation Aérienne Générale, habituellement désigné par l'acronyme CAG et dans lequel évoluent notamment des aéronefs civils, est voué à être peuplé d'un nombre croissant de véhicules des types précités. Il est par conséquent nécessaire que ces aéronefs puissent évoluer dans toutes les classes d'espace, et traverser des frontières, sans pour autant qu'ils représentent un risque vis-à-vis des personnes humaines. Ainsi, ces aéronefs doivent démontrer un niveau de sécurité au moins égal à celui des aéronefs comprenant un pilote à leur bord, qu'ils soient pilotés, préprogrammés ou bien fonctionnant de manière totalement autonome. Les drones doivent notamment mettre en oeuvre un système de type "Sense and Avoid", leur permettant la détection d'objets se présentant potentiellement comme des obstacles à leur évolution, et la mise en oeuvre de procédures d'évitement le cas échéant. Un système de type "Sense and Avoid" s'appuie sur une fonction « sense » de détection et de pistage, ainsi que sur une fonction « avoid » d'évitement, qui doit modifier de manière préemptive la route de l'aéronef dans une zone de protection, typiquement définie par une sphère centrée sur l'aéronef, d'un rayon de 500 pieds. Cette fonction d'évitement, pour les équipements coopératifs, est effectuée par le TCAS, sigle correspondant au terme anglo-saxon « Traffic Alert Collision Avoidance System », ou bien par le T2CAS, sigle correspondant au terme anglo-saxon « Terrain and Traffic Collision Avoidance System » si la détection du sol est intégrée par un couplage avec les données fournies par un radio-altimètre équipant l'aéronef.

Un système de type "Sense and Avoid" est susceptible de présenter un risque vis-à-vis de la sécurité des personnes, et se doit par conséquent de satisfaire à des exigences sévères en termes de fiabilité et d'efficacité. De telles exigences sont spécifiées dans des normes, par exemple dans la norme STANAG 4671 de l'OTAN. Il est notamment nécessaire qu'un système de type "Sense and Avoid" ait une couverture angulaire au moins équivalente à la couverture visuelle d'un pilote humain, soit, de manière typique, environ ± 110° en azimut et environ ± 20° en élévation. Il est également exigé que le système soit performant quelles que soient les conditions météorologiques. Toutes ces exigences sont déclinées en spécifications du système radar aéroporté, et en déterminent notamment les performances angulaires, ainsi que la portée, devant prendre en considération le temps de renouvellement de l'information. Ces exigences imposent notamment le choix d'un compromis entre la portée et le temps de renouvellement de l'information, dans un domaine angulaire très large.

Des systèmes de radars équipant des aéronefs connus de l'état de la technique comprennent notamment au moins une antenne mécanique rotative ou à balayage électronique. De tels systèmes fonctionnent à une fréquence élevée, et disposent par conséquent d'un faisceau fin. Ils permettent ainsi une poursuite précise, mais en revanche leur vitesse de balayage doit être extrêmement élevée, de manière à couvrir le large domaine angulaire requis à une cadence suffisante. En outre, de tels systèmes présentent l'inconvénient de nécessiter une excroissance sur la structure du drone, accueillant la structure d'antenne motorisée ou à balayage électronique. Cet inconvénient a pour conséquences des contraintes aérodynamiques et/ou d'encombrement. Egalement, la structure de l'aéronef incorpore systématiquement des éléments tels qu'un train d'atterrissage, des ailes, etc., qui représentent autant de masques, imposant une position quasiment unique de la structure d'antenne. Cette position se situe habituellement au niveau du nez de l'aéronef, qui est la partie la plus exposée à des chocs, par exemple en cas d'impact d'oiseaux. La structure d'antenne étant centralisée à ce niveau, un choc au niveau du nez de l'aéronef peut alors entraîner une perte totale de la fonctionnalité de "Sense and Avoid". La redondance d'un tel système est en outre délicate, voire impossible à réaliser en pratique.

Un autre inconvénient des systèmes connus de l'état de la technique réside dans le fait que ceux-ci ne permettent pas la réalisation d'une pluralité de fonctions sur la base de la même architecture matérielle. Notamment, le segment radar des systèmes prévus pour réaliser la fonction de "Sense and Avoid" dans des drones, fonctionne en bande millimétrique, typiquement dans les bandes Ka ou Ku. Or la bande Ka, par exemple, ne permet pas une détection des conditions météorologiques, les radars à faisceau étroit et à balayage ne pouvant pas permettre la réalisation simultanée de plus d'une fonction. Ainsi, un radar à balayage ne permet pas par exemple de détecter de façon fiable un radar météorologique, fonctionnant lui-même en balayage, car la probabilité d'interception des signaux est faible.

Un autre inconvénient des systèmes connus de l'état de la technique réside également dans le fait qu'un balayage de l'antenne a pour conséquence une probabilité de détection des obstacles relativement faible. De surcroît, les systèmes connus de l'état de la technique ne permettent pas une hiérarchisation de la dangerosité des cibles détectées. Dans ces systèmes, le pistage des cibles ne peut être réalisé qu'en mode échantillonné, avec par conséquent des risques de confusion, principalement en présence de fouillis au niveau du sol, ou bien de véhicules terrestres. Ces systèmes permettent une focalisation sur des cibles particulières, par un passage d'un mode de veille à un mode de pistage, néanmoins un tel passage nuit à la détection de nouvelles cibles potentiellement dangereuses.

Ainsi, le pistage de cibles multiples, ou pistage "multi-cible", est limité par les contraintes mécaniques apportées à l'antenne. Il peut être fait recours à des vitesses de balayage très élevées, par exemple des temps de balayage inférieurs à 2 secondes, néanmoins cela implique un faible temps d'intégration sur la cible, et nécessite l'emploi de puissances d'émissions élevées. Par conséquent, dans les systèmes connus de l'état de la technique, les temps de revisite étant longs, et le temps d'intégration sur la cible étant court, il n'est pas possible pour la chaîne de réception de pallier les carences liées au balayage. Les puissances d'émission nécessaires à l'accomplissement de la fonction de "Sense and Avoid" sont donc importantes, avec les inconvénients suivants :

- une consommation importante,
- la nécessité d'un fonctionnement du radar en mode pulsé,
- la nécessité de recourir à des fréquences de fonctionnement plus élevées, dans le but de permettre une ségrégation spatiale satisfaisante, au détriment du rendement,
- la difficulté d'assurer une dissipation thermique efficace, l'émetteur étant centralisé,
- la nécessité de dédier le nez de l'aéronef, d'une manière typique, à la mise en oeuvre de la fonction de "Sense and Avoid",
- la difficulté d'assurer une immunité satisfaisante aux rayonnements électromagnétiques, en raison de la forte puissance d'émission,
- la difficulté de fiabiliser un système reposant sur des éléments en mouvement de criticité majeure,
- le balayage de l'antenne a pour conséquence une poursuite discontinue des cibles, celles-ci étant échantillonnées au rythme du balayage. Il est également nécessaire d'associer à chaque balayage les échos détectés aux pistes correspondantes, même pendant des virages du porteur, sauf si la centrale inertielle de ce dernier est intégrée dans le système de pistage, la centrale inertielle étant alors critique pour la fonction de "Sense and Avoid",
- les limitations inhérentes au pistage multi-cibles, notamment la limitation du nombre de pistes suivies, et la nécessité d'opérer des pointages d'antenne spécifiques,
- la nécessité d'un long temps d'éclairement pour des cibles offrant une faible surface équivalente radar ou SER, entraînant une difficulté de bon compromis avec le taux de rafraîchissement de l'information et la qualité du pistage.

Des systèmes connus de l'état de la technique assurant une fonctionnalité de "Sense and Avoid" peuvent également se baser sur des modes coopératifs, cependant de tels systèmes présentent les inconvénients suivants :

- les petits avions de tourisme, les véhicules ultra-légers motorisés ou ULM, les ailes delta et les ballons sondes ne sont pas équipés de moyens coopératifs,
- dans les zones de circulation dense, les normes existantes relatives aux modes coopératifs imposent aux aéronefs des évitements par changements d'altitude ; or les aéronefs de type drones peuvent ne pas être aptes à des changements brutaux d'altitude, en raison d'un manque de puissance moteur, et d'une finesse aérodynamique ne leur permettant pas une évolution rapide en montée et en descente.

En tout état de cause, et pour les raisons liées aux inconvénients précités, le recours à des modes coopératifs seuls n'est pas envisageable pour assurer une fonctionnalité de type "Sense and Avoid".

Le brevet de référence US 6,311,108 décrit un système autonome de guidage d'un aéronef à l'atterrissage. La demande de brevet de référence WO 2008/134815 décrit un système et un procédé d'évitement de collisions. La demande de brevet de référence US 4,746,924 décrit un dispositif et des méthodes de localisation de cibles utilisant des signaux générés par une source non-coopérative.

Un but de la présente invention est de pallier les inconvénients précités, en proposant un dispositif permettant la mise en oeuvre d'une fonctionnalité de type "Sense and Avoid" dans un aéronef, y compris dans des aéronefs de taille réduite, et ne nécessitant pas une antenne tournante ou à balayage, libérant notamment les contraintes d'installation liées aux masques formés par des parties de la structure de l'aéronef.

Un avantage de l'invention est qu'elle permet d'obtenir du dispositif dont elle fait l'objet, une large couverture angulaire en veille, à une cadence élevée, sans nuire aux performances de la fonction de poursuite des cibles.

Un autre avantage de l'invention est qu'elle permet l'adjonction de fonctions connexes permettant une meilleure compacité fonctionnelle, telles que la prévention de collision avec des oiseaux, la détection météorologique, la participation à la détection de conditions atmosphériques tels que le givre, une fonction de balise pour dispositifs d'atterrissage automatique.

Un autre avantage de l'invention est qu'elle offre une grande tolérance aux pannes.

A cet effet, l'invention a pour objet un dispositif radar aéroporté multifonction fonctionnant en modes actif et passif, caractérisé en ce qu'il comprend une pluralité de modules d'antennes fixes vis-à-vis de l'aéronef, disposés sensiblement en surface de l'aéronef et formant des faisceaux en émission et en réception de largeur et de caractéristiques adaptées à la direction visée, permettant la détection de cibles pour la mise en oeuvre d'une fonctionnalité de détection et évitement d'obstacles.

Dans un mode de réalisation de l'invention, les modules d'antennes peuvent être des modules d'antennes d'émission et/ou de réception.

Dans un mode de réalisation de l'invention, les modules d'antennes peuvent comprendre une pluralité de voies de réception élémentaires et/ou d'éléments rayonnants.

Dans un mode de réalisation de l'invention, les modules d'antennes peuvent être conformes à la surface de l'aéronef et/ou plans, et disposés sur et/ou en-dessous de la peau de l'aéronef.

Dans un mode de réalisation de l'invention, le dispositif radar aéroporté peut être **caractérisé en ce qu'**il fonctionne en bande X, en mode séquentiel ou en mode continu.

Dans un mode de réalisation de l'invention, le dispositif radar aéroporté peut être **caractérisé en ce que** les modules d'antennes de réception et/ou d'émission sont disposés dans un bloc unitaire apte à être fixé au niveau du nez de l'aéronef.

Dans un mode de réalisation de l'invention, le dispositif radar aéroporté peut être **caractérisé en ce que** les modules d'antennes de réception et/ou d'émission sont disposés de manière distribuée au niveau de différentes parties de la surface de l'aéronef.

Dans un mode de réalisation de l'invention, le dispositif radar aéroporté peut être **caractérisé en ce qu'**il comprend en outre des moyens de traitement recevant des données des modules d'antennes de réception et envoyant des données traitées aux modules d'antennes d'émission, et produisant des données de pistage des cibles détectées en modes actif et passif.

Dans un mode de réalisation de l'invention, lesdits moyens de traitement peuvent envoyer des données aux modules d'antennes d'émission aptes à former des faisceaux différant selon différentes zones angulaire de détection définies en proximité de l'aéronef.

Dans un mode de réalisation de l'invention, le dispositif radar aéroporté peut être **caractérisé en ce qu'**il est apte à être employé comme un radar météorologique pendant des fenêtres temporelles déterminées.

Dans un mode de réalisation de l'invention, le dispositif radar aéroporté peut être **caractérisé en ce que** les moyens de traitement reçoivent en outre des données relatives à l'aéronef comprenant des informations relatives à son altitude, sa vitesse et/ou son attitude, exploitées dynamiquement par les moyens de traitement.

Dans un mode de réalisation de l'invention, le dispositif radar aéroporté peut être **caractérisé en ce qu'**une première zone angulaire de détection est définie en avant de l'aéronef, par une ouverture angulaire $\alpha$ de part et d'autre de l'axe principal de l'aéronef dans le plan principal de l'aéronef, une deuxième zone angulaire de détection étant définie par une représentation dans le plan principal de l'aéronef s'étendant sensiblement depuis la limite de ladite première zone de détection jusqu'à la perpendiculaire à l'axe principal de l'aéronef, une troisième zone angulaire de détection s'étendant sensiblement en arrière de l'aéronef depuis la limite de ladite deuxième zone angulaire de détection.

Dans un mode de réalisation de l'invention, lesdits moyens de traitement peuvent réaliser un filtrage visant à discriminer les cibles détectées dans l'une des trois zones angulaires de détection dont la vitesse Doppler mesurée est négative.

Dans un mode de réalisation de l'invention, lesdits moyens de traitement peuvent calculer la vitesse des cibles détectées, et réaliser un filtrage additionnel centré sur les cibles détectées dans la première zone angulaire de détection dont la vitesse est sensiblement nulle, augmentant le temps d'intégration sur lesdites cibles de vitesse sensiblement nulle.

Dans un mode de réalisation de l'invention, lesdits moyens de traitement peuvent réaliser un filtrage additionnel visant à discriminer desdites cibles de vitesse sensiblement nulle détectées dans la première zone angulaire de détection, celles qui sont issues du fouillis de sol.

Dans un mode de réalisation de l'invention, le dispositif radar aéroporté peut être **caractérisé en ce que** les moyens de traitement réalisent un filtrage visant à discriminer des cibles détectées dans ladite troisième zone angulaire de détection celles dont la vitesse Doppler n'est pas supérieure à la vitesse de l'aéronef.

Dans un mode de réalisation de l'invention, lesdits moyens de traitement peuvent faire varier dynamiquement l'angle d'ouverture $\alpha$ définissant la première zone angulaire de détection en fonction des données relatives à l'aéronef.

Dans un mode de réalisation de l'invention, lesdits moyens de traitement peuvent faire varier dynamiquement la forme de l'onde d'émission, les temps d'intégration, et/ou les modules d'antennes utilisés en fonction des données relatives à l'aéronef.

Dans un mode de réalisation de l'invention, lesdits moyens de traitement peuvent produire une fenêtre temporelle pendant laquelle le dispositif radar aéroporté est accordé sur la fréquence des radars météorologiques aéroportés, permettant leur détection.

Dans un mode de réalisation de l'invention, lesdits moyens de traitement peuvent détecter la défaillance d'un module d'antenne et modifier le cas échéant les faisceaux formés par les modules d'antennes adjacents de manière à compenser la perte de détection occasionnée.

Dans un mode de réalisation de l'invention, lesdits moyens de traitement peuvent consolider le pistage des cibles sur la base desdites détections de radars météorologiques aéroportés par une association des pistes correspondantes.

Dans un mode de réalisation de l'invention, lesdits moyens de traitement peuvent comprendre une boîte à outils générant les données relatives à la fonctionnalité de détection et évitement, comprenant les pistes filtrées, les cibles passives détectées, les détections de radars météorologiques aéroportés, les associations de cibles, les temps de réaction requis, les points et angles de collision prédits, les détections de nuages frontaux, l'altitude calculée de l'aéronef et/ou les détections frontales d'oiseaux.

Dans un mode de réalisation de l'invention, les données générées par la boîte à outil peuvent être communiquées à l'extérieur par des liaisons radioélectriques, des liaisons de données et/ou des liaisons de type ADS-B.

Dans un mode de réalisation de l'invention, le dispositif radar aéroporté peut être **caractérisé en ce qu'**il est apte à commander un dispositif d'évitement embarqué dans l'aéronef.

Dans un mode de réalisation de l'invention, le dispositif radar aéroporté peut être **caractérisé en ce que** les moyens de traitement calculent l'altitude de l'aéronef.

Dans un mode de réalisation de l'invention, le dispositif radar aéroporté peut être **caractérisé en ce qu'**il est apte à commander des dispositifs extérieurs de détection de cibles permettant de consolider le pistage.

Dans un mode de réalisation de l'invention, le dispositif radar aéroporté peut être **caractérisé en ce qu'**il est apte à générer des messages radiophoniques décrivant la position, la vitesse, l'attitude et/ou les manoeuvres de l'aéronef.

La présente invention a également pour objet un système d'atterrissage automatique pour aéronef, comprenant un dispositif radar aéroporté tel que décrit dans les modes de réalisation présentés ci-dessus, et au moins une balise radioélectrique au sol à proximité d'une piste d'aéroport, **caractérisé en ce que** le dispositif radar aéroporté est configuré pendant des fenêtres temporelles déterminées, pour émettre et/ou recevoir des signaux spécifiques respectivement à destination et/ou en provenance des balises radioélectriques au sol.

Dans un mode de réalisation de l'invention, ledit système d'atterrissage automatique pour aéronef peut être **caractérisé en ce qu'**il comprend quatre balises au sol, la première et la deuxième balises étant sensiblement espacées de la largeur de la piste d'aéroport matérialisant le point d'arrêt ou le point de toucher de l'aéronef, la troisième et la quatrième balises étant sensiblement espacées de la largeur de la piste d'aéroport et sensiblement éloignées desdites première et deuxième balises de la longueur de la piste d'aéroport, les balises répondant à des signaux spécifiques émis par le dispositif radar aéroporté, le dispositif radar calculant la distance moyenne de l'aéronef à la piste d'aéroport et la hauteur de l'aéronef par rapport au plan contenant lesdites balises.

D'autres caractéristiques et avantages de l'invention apparaîtront à la lecture de la description, donnée à titre d'exemple, faite en regard des dessins annexés qui représentent :

- la figure 1, en vue de dessus, les différentes zones de détection pour un aéronef équipé d'une fonctionnalité de type "Sense and Avoid",
- les figures 2a et 2b, en synoptique, le dimensionnement des lobes d'antenne d'un dispositif radar selon un exemple de réalisation de l'invention, respectivement en azimut et en élévation,
- la figure 3, en vue en coupe de dessus, les différentes zones de couverture pour la détection par un aéronef mettant en oeuvre un dispositif radar selon un exemple de réalisation de l'invention,
- les figures 4a et 4b, en synoptique, respectivement la disposition d'une pluralité de modules d'antennes formant un dispositif radar selon un exemple de réalisation, et un exemple de réalisation d'un module d'antenne,
- la figure 5, un diagramme illustrant l'architecture globale d'un dispositif radar multifonction selon un exemple de réalisation de l'invention,
- la figure 6, un diagramme illustrant une méthode de détermination de pistes présentant un risque de collision,
- la figures 7, en synoptique, un dispositif d'aide à l'atterrissage fonctionnant conjointement avec un radar multifonction, dans un exemple de réalisation de l'invention.

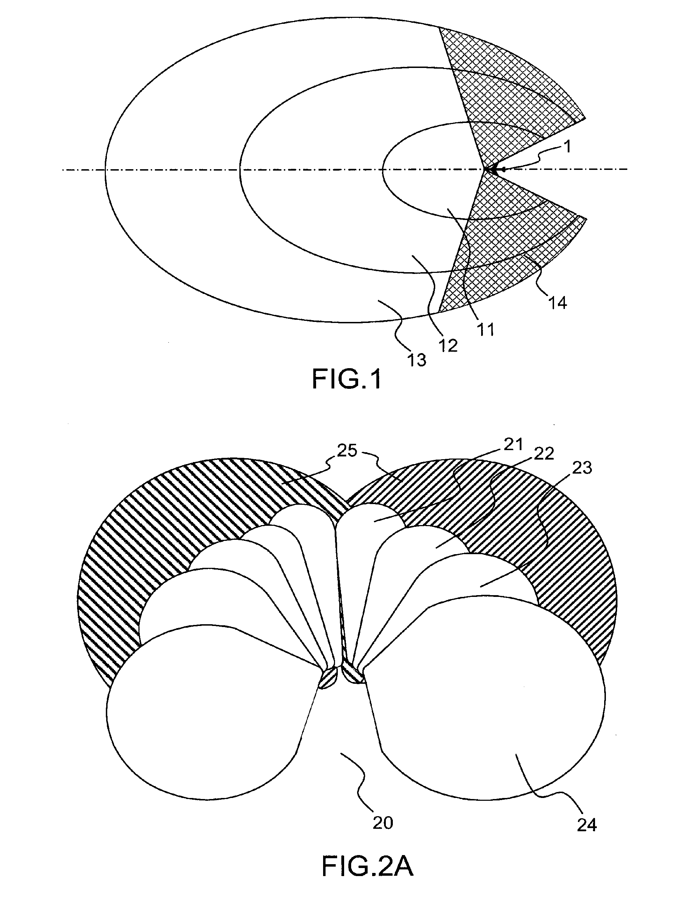

La figure 1 présente, en vue de dessus, les différentes zones de détection pour un aéronef équipé d'une fonctionnalité de type "Sense and Avoid".

Un aéronef 1 évolue dans un espace aérien, et le système de détection qui lui est associé doit couvrir une pluralité de zones de détection 11, 12, 13 au sein desquelles la détection de cibles implique différentes actions requérant différents temps de réaction.

La première zone de détection 11 est définie dans la plus grande proximité de l'aéronef 1, la représentation de la première zone de détection 11 dans le plan principal de l'aéronef 1 peut être une ellipse dont un des foyers coïncide avec l'aéronef 1. Toute détection d'une cible au sein de la première zone de détection 11 est considérée comme un danger immédiat, et une réaction immédiate de l'aéronef 1 est requise, pour par exemple entreprendre une procédure d'évitement automatique.

La deuxième zone de détection 12 est définie dans un domaine spatial situé au-delà de la première zone de détection 11, en référence à l'aéronef 1. La représentation de la deuxième zone de détection 12 dans le plan principal de l'aéronef 1 peut également être une ellipse. La détection d'une cible au sein de la deuxième zone de détection 12 requiert également une réaction, cependant le temps de réaction requis peut impliquer une décision humaine.

La troisième zone de détection 13 est définie dans un domaine spatial situé au-delà de la deuxième zone de détection 12, en référence à l'aéronef 1. La représentation de la troisième zone de détection 13 dans le plan principal de l'aéronef 1 peut également être une ellipse. La troisième zone de détection 13 est la zone dans laquelle il est nécessaire de pouvoir détecter la présence de cible pour assurer la sécurité du vol. En revanche la détection d'une cible dans la troisième zone de détection 13 ne requiert pas de réaction.

Plus la vitesse de vol de l'aéronef 1 est élevée, plus les ellipses représentant les différentes zones de détection 11, 12, 13 s'étendent suivant leur grand axe et se contractent suivant leur petit axe.

Il est rappelé ici que le champ angulaire qui doit être couvert par le système de détection correspond approximativement à ce qu'un pilote humain est capable d'observer visuellement, soit typiquement environ $\pm$ 110° en azimut et $\pm$20° en élévation. Plus la vitesse de vol de l'aéronef 1 est élevée, et moins les menaces latérales et en zone arrière sont importantes. Il existe une zone angulaire 14, sensiblement de part et d'autre des parties latérales de l'aéronef 1, et en arrière de celui-ci, dans laquelle il est possible de ne considérer que la vitesse relative des cibles, évaluée par exemple par le système radar par une appréciation de la vitesse Doppler, sans nuire à la sécurité du vol.

D'une manière générale, il peut être avantageux que le dispositif radar équipant l'aéronef 1 assure une couverture optimale de différentes zones environnant l'aéronef 1, et que la couverture des antennes, les temps d'intégration sur les cibles, ainsi que les traitements associés, puissent être différents en fonction des zones considérées, et avantageusement encore, puissent être adaptés de manière dynamique, par exemple en fonction des paramètres de vol de l'aéronef 1, et notamment sa vitesse, son altitude, son attitude, etc., et/ou en fonction du pistage des cibles, avec par exemple la possibilité d'assurer sur demande une détection plus fine focalisée sur des cibles particulières.

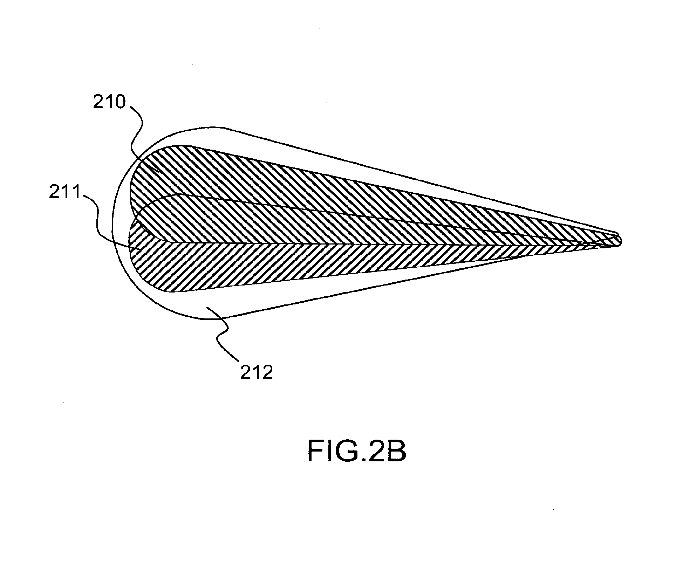

Les figures 2a et 2b présentent, en synoptique, le dimensionnement des lobes d'antenne d'un dispositif radar selon un exemple de réalisation de l'invention, respectivement en azimut et en élévation.

Dans l'exemple illustré par la figure 2a, un réseau d'antennes fixes, non représenté sur la figure, peut être disposé au niveau du nez 20 de l'aéronef 1. La configuration du réseau d'antennes permet la formation d'une pluralité de faisceaux en réception 21, 22, 23, 24 représentés dans le plan principal de l'aéronef 1, ainsi que la formation d'une pluralité 25 de faisceaux en émission. Dans l'exemple illustré par la figure, seulement deux lobes larges sont produits en émission, de part et d'autre de l'axe principal de l'aéronef. Par exemple, des faisceaux d'antennes en réception plus larges 24, 23 peuvent être formés pour la détection de cibles dans les zones latérales, et les faisceaux d'antennes 21, 22 permettant la détection de cibles dans les zones frontales, où une plus grande précision est requise, peuvent se présenter sous la forme de pinceaux plus fins.

Maintenant en référence à la figure 2b, la configuration du réseau d'antennes fixes permet également la formation d'une pluralité de faisceaux en réception 210, 211, et d'un ou une pluralité de faisceaux en émission, un faisceau en émission 212 étant représenté à titre d'exemple sur la figure 2b.

Il est à noter qu'un dispositif selon la présente invention peut fonctionner en mode actif et en mode passif.

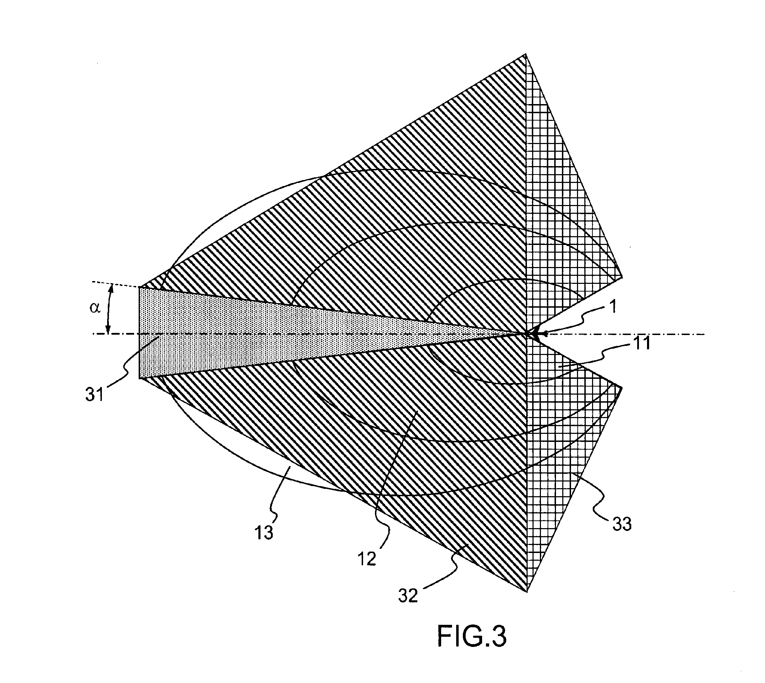

La figure 3 présente, en vue en coupe de dessus, les différentes zones de couverture pour la détection par un aéronef mettant en oeuvre un dispositif radar selon un exemple de réalisation de l'invention.

Ainsi que cela est décrit précédemment en référence à la figure 1, l'aéronef 1 est associé à trois zones de détection 11, 12, 13. Il est possible pour le système de radar de l'aéronef 1, de procéder à une différentiation du traitement en fonction de l'angle d'arrivée du signal reçu, et ainsi de définir trois zones angulaires de détection 31, 32, 33.

La première zone angulaire de détection 31 est par exemple définie par un angle $\alpha$ autour de l'axe principal de l'aéronef 1, en avant de celui-ci. L'angle $\alpha$ peut avantageusement varier en fonction de la vitesse de l'aéronef 1.

La deuxième zone angulaire de détection 32 est par exemple définie sensiblement à l'avant de l'aéronef 1, s'étendant de part et d'autre de la première zone angulaire de détection 31, jusqu'à un plan orthogonal à l'axe principal de l'aéronef 1.

La troisième zone angulaire de détection 33 est par exemple définie sensiblement à l'arrière de l'aéronef 1, c'est-à-dire à partir du plan perpendiculaire à l'axe principal de l'aéronef 1 précitée, et en arrière de l'aéronef 1.

La première zone angulaire de détection 31 est une zone de grande criticité, pour laquelle les exigences en termes de puissance de calcul et de temps d'intégration sont les plus contraignantes. Il s'agit également de la zone dans laquelle la connaissance précise de la localisation des cibles est primordiale. Il est notamment à remarquer que les vitesses de l'aéronef 1 et de l'obstacle à éviter peuvent dans le pire cas s'ajouter. Egalement, le cas particulier du ballon sonde immobile dans l'air est très contraignant en terme de temps d'intégration du signal, car sa SER peut être faible.

La fréquence Doppler d'une cible peut s'écrire $f_d = 2*(V_1 + V_2)/\lambda$, $V_1$ étant la vitesse de déplacement de l'aéronef 1, $V_2$ la vitesse de déplacement de la cible, et $\lambda$ la longueur d'onde de la fréquence du signal radar.

La vitesse de rapprochement $V_R$ d'une cible peut être définie comme la somme des vitesses $V_1$ et $V_2$.

Il est possible, pour les cibles détectées dans la première zone angulaire de détection 31, de procéder à un filtrage visant à discriminer les cibles en éloignement, c'est-à-dire dont la vitesse Doppler mesurée $V_R$ est négative.

Avantageusement, il est possible de procéder à un filtrage centré sur les cibles à vitesse nulle, soit $V_2 = 0$, visant à permettre de dégager pour de telles cibles, un temps d'intégration maximal. Le but d'un tel filtrage est de permettre un temps d'intégration suffisant pour pallier des SER faibles et les distinguer du bruit. Cela permet par exemple de désactiver des filtres de transformée de Fourier rapide, ou "FFT", qui ne sont pas utiles et de se concentrer sur les vitesses d'intérêt pour la fonctionnalité de "Sense and Avoid". Egalement, il est possible de recourir à une technique de formation de faisceau par le calcul, désignée par le sigle "FFC", dans le but de réduire le volume à examiner correspondant à l'élévation de la zone de sécurité considérée et à l'azimut de la zone de sécurité.

Avantageusement encore, il est possible de procéder à un filtrage visant à éliminer des cibles à vitesse nulle précitées, celles qui sont issues du fouillis au niveau du sol. Un tel filtrage peut par exemple être réalisé grâce à un traitement mono-impulsion en élévation, basé sur une technique d'émission colorée. Le principe de l'émission colorée se base sur l'émission d'une onde ayant une double forme, une première forme de l'onde d'émission étant composée d'au moins deux sinusoïdes de fréquences différentes émises simultanément, la deuxième forme d'onde étant une onde à impulsions. Il est possible de se référer à l'article intitulé "Space-time transmission and coding for airborne radars" de François Le Chevalier publié dans Radar Science and Technology, vol. 6, Dec. 2008, qui décrit le principe d'émission colorée par un dispositif radar.

La deuxième zone angulaire de détection 32 est une zone essentiellement latérale, de moindre criticité que la première zone angulaire de détection 31.

De la même manière que pour la première zone angulaire de détection 31, il est possible de procéder à un filtrage visant à discriminer les cibles en éloignement. Néanmoins, il n'est pas nécessaire, pour les cibles détectées dans la deuxième zone angulaire de détection 32, de procéder à un filtrage particulier vis-à-vis des cibles de vitesse nulle. Il se peut en effet que de cibles déjà détectées auparavant dans la première zone angulaire de détection 31, ou bien de cibles ne présentant pas de risque de collision.

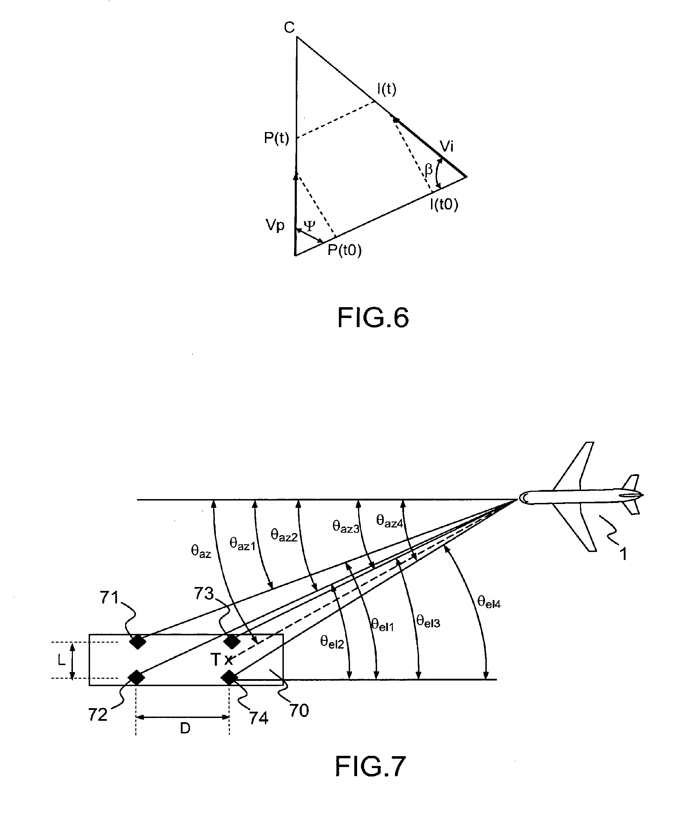

Il est également nécessaire, pour les cibles détectées dans la deuxième zone angulaire de détection 32, de procéder à des mesures de leurs positions, afin de déterminer leurs trajectoires en fonction de la trajectoire de l'aéronef 1. Il est alors possible de prendre en compte les pistes de cibles qui représentent un risque de collision. Un exemple typique de méthode de détermination du risque de collision d'une cible est décrit ci-après en référence à la figure 6.

La troisième zone angulaire de détection 33 est une zone essentiellement en arrière de l'aéronef 1, partant de moindre criticité. Dans la troisième zone angulaire de détection 33, il est possible de ne considérer que les cibles dont la vitesse Doppler est supérieure à la vitesse de l'aéronef 1, et de ne pas prendre en considération toutes les autres cibles, dans un souci de minimisation de la charge de calcul pour le système de radar.

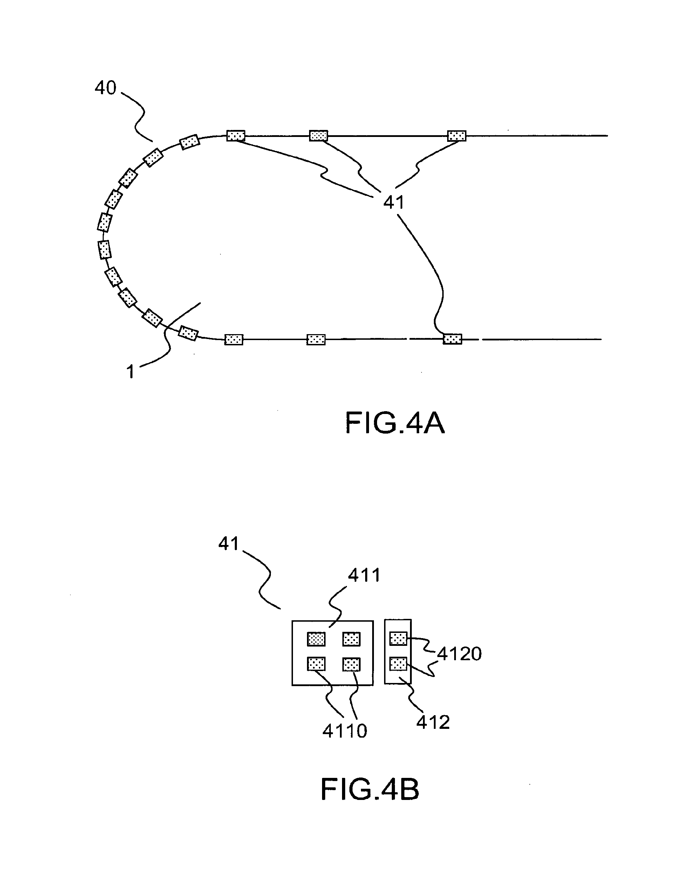

Les figures 4a et 4b présentent, en synoptique, respectivement la disposition d'une pluralité de modules d'antennes formant un dispositif radar selon un exemple de réalisation, et un exemple de réalisation d'un module d'antenne.

En référence à la figure 4a, un dispositif d'antenne 40 peut comprendre une pluralité de modules d'antennes 41. Dans l'exemple illustré par la figure, la disposition des modules d'antennes 41 est destinée à une installation de ceux-ci au niveau du nez de l'aéronef 1 : une telle solution privilégie la performance du dispositif radar dans l'axe principal de l'aéronef 1, et permet de diminuer les contraintes d'implantation des modules d'antennes 41 au minimum dans les zones arrières. En effet, dans les zones situées sensiblement à l'arrière de l'aéronef, seules les cibles dont les vitesses Doppler sont positives sont à considérer. La taille des lobes de détection peut être plus grande car le filtrage en vitesse est prédominant, et les cibles pouvant conduire à une collision sont éloignées du fouillis de sol. De ce fait, il est possible d'appauvrir la découpe de la couverture spatiale dans ces zones, et s'y contenter de précisions angulaires plus larges. La discrimination peut être réalisée en élévation et en distance. Une antenne de réception de type pseudo omni-statique, c'est-à-dire une antenne de type dipôle, permet alors de satisfaire aux contraintes de précision.

Différents exemples de structures du dispositif d'antenne 40, ainsi que de mises en oeuvre possibles dans l'aéronef 1, sont décrits ci-après.

Les modules d'antennes 41 peuvent être fixes, et disposés de manière à permettre la formation d'une pluralité de faisceaux, ainsi que cela est décrit précédemment en référence à la figure 2. Les modules d'antennes 41 peuvent être des modules antennaires de type "patches". Leur disposition peut par exemple permettre, par associations, la formation de pinceaux fins à la demande lors de la détection de cibles, dans le but d'affiner les mesures, et de satisfaire ainsi aux niveaux de performances exigés en matière de précision angulaire. D'une manière typique, un radar permettant une fonctionnalité de "Sense and Avoid" doit permettre la détection de cibles pouvant être distantes de 0,5 NM. Par exemple, dans un exemple typique où la distance de détection des cibles situées vers l'avant de l'aéronef 1 est de 7 NM, il est nécessaire pour garantir la séparation en élévation, que les angles de détection soient de 4°. La distance de détection de 7 NM est déterminée par les vitesses relatives des porteurs dans un scénario typique dans l'optique du respect du temps de préavis requis pour les manoeuvres, typiquement de 23 secondes. Un tel scénario correspond par exemple à une configuration typique définie de la manière suivante : la cible peut être un avion évoluant à une vitesse de 800 km/h, soit 220 m/s, et l'aéronef 1 peut évoluer à la même vitesse dans la direction opposée. Ainsi la vitesse relative des deux porteurs est de 440 m/s. La distance couverte en 23 secondes à une vitesse de 440 m/s est de 10,12 km, soit environ 5,5 NM. Le choix d'une marge de sécurité de l'ordre de 20% impose une distance de préavis de 7 NM pour des cibles rapides dont la SER est de l'ordre de 1m$^2$. En ce qui concerne les cibles de SER moindre, les marges de réaction peuvent être plus importantes. Les avions de ligne, susceptibles d'évoluer à des vitesses supérieures, offrent en revanche une SER plus importante.

Maintenant en référence à la figure 4b, un module d'antenne 41 peut comprendre un module de réception 411 et un module d'émission 412. Chaque module de réception 411 peut comprendre une pluralité de voies de réception élémentaires 4110. De la même manière chaque module d'émission 412 peut comprendre une pluralité d'éléments rayonnants 4120. Il est ainsi possible pour chaque module de réception et d'émission 411, 412 de produire une pluralité de faisceaux différents. Une telle configuration permet par exemple de mettre en oeuvre la FFC, dans le but de former simultanément un nombre important de faisceaux à la réception, en permettant notamment la couverture d'un large domaine angulaire, ainsi que l'obtention d'un gain d'antenne important.

Avantageusement, les modules d'antennes 41 peuvent être configurés de manière à être chacun situés à proximité de modules d'antennes adjacents, de manière à ce qu'en cas de défaillance d'un module d'antenne 41, les modules d'antennes adjacents puissent suppléer à la carence. Par exemple, la configuration des modules d'antennes 41 peut permettre que la défaillance d'un module d'antenne 41 entraîne une perte de l'ordre de 3 dB sur la portée, diminuant la zone de préavis lointain sans nuire pour autant à la fonctionnalité de "Sense and Avoid". Il est par exemple possible de détecter la défaillance d'un module d'antenne 41 par la mesure du facteur de bruit au niveau d'un module de réception 411, qui doit être suffisamment proche du facteur de bruit au niveau des modules de réception 411 adjacents. Dans le cas d'une défaillance détectée d'un module d'antenne 41, il est alors possible de former un faisceau lacunaire n'intégrant pas le module de réception défaillant, de manière à ce que les pertes dans la direction considérée soient de 3dB au pire, soit 20% sur la distance de détection d'une cible de 1m$^2$ évoluant à MACH 0,8 sur un aéronef porteur évoluant lui-même à une vitesse de MACH 0,8.

Bien sûr, l'illustration de la figure 4b est donnée à titre d'exemple, et différentes configurations des modules d'antennes 41 peuvent être envisagées selon les besoins. Par exemple, il est possible de disposer dans les zones frontales, des modules d'antennes 41 ne comprenant que des éléments rayonnants 4120, par exemple disposés par paires de deux éléments rayonnants à la verticale l'un de l'autre, et de disposer dans les zones latérales, des modules d'antennes 41 ne comprenant que des voies de réception élémentaires 4110, disposées à l'horizontale les unes des autres. Il est à noter que les modules d'antennes 41 ne sont pas nécessairement alignés ni régulièrement espacés. Une telle configuration permet par exemple de former des faisceaux à l'émission et à la réception, en azimut et en élévation, par exemple conformes aux exemples décrits ci-dessus et illustrés par les figures 2a et 2b, c'est-à-dire, plus généralement des faisceaux de nature non homogène ou non symétrique autour du porteur, avec la possibilité de favoriser des zones de détection en fonction de leur intérêt. Notamment, une telle configuration peut permettre de favoriser des zones de détection dans l'axe avant du porteur, ce qui ne saurait être permis par des configurations de type radar à ouverture synthétique, communément désignés suivant l'acronyme SAR correspondant à la terminologie anglaise "Synthetic Aperture Radar", comprenant par exemple des modules d'antennes disposés parallèlement à l'axe longitudinal du porteur. Ou encore, il est possible de disposer des modules d'antennes 41 comprenant chacun un module de réception 411 et un module d'émission 412, chacun comprenant une pluralité d'éléments rayonnants 4120 et de voies de réception élémentaires 4110 aptes à êtres activés ou désactivés par des commutateurs, de manière à permettre la formation selon les besoins envisagés d'une grande variété de faisceaux en réception et en émission, en azimut et en élévation.

Un dispositif selon la présente invention peut comprendre des modules d'antennes 41 disposés de manière adaptée sensiblement en surface de l'aéronef, leur distribution pouvant être régulière ou irrégulière.

L'émission et la réception peuvent être réalisées de manière séquentielle ou continue. Dans le cas où l'émission et la réception sont réalisées de manière continue, celles-ci doivent être réalisées au moyen de modules d'antennes d'émission et de réception séparés. Dans le cas où elles sont réalisées de manière séquentielle, les modules d'antennes d'émission et de réception peuvent être co-localisés.

Les modules d'antennes 41 sont sensiblement disposés en surface de l'aéronef : ils peuvent également être conformes à la surface de l'aéronef, ou plans, plaqués sur ou sous la peau de l'aéronef 1, co-localisés ou non.

Les modules d'antennes 41 peuvent par exemple être centralisés dans un ensemble de modules installés dans un bloc physique unique, placé sur ou dans le nez de l'aéronef 1, avantageusement de manière à pouvoir être amovible.

Egalement, les modules d'antennes 41 peuvent être dispersés au niveau de la surface de l'aéronef 1, non seulement au niveau du nez de celui-ci. Les modules d'antennes 41 peuvent par exemple être installés de manière déportée en pseudo mono-statique et offrir des couvertures hétérogènes en émission et en réception. Il est par exemple possible d'envisager l'implantation des antennes de réception dans les bords d'attaque des ailes pour libérer le nez et sur les flancs de l'aéronef pour les compléments de couverture en azimut. Il est alors nécessaire de déphaser les sous réseaux antennaires statiquement de manière à adapter la couverture à la géométrie du porteur.

L'implantation de faisceaux, par exemple d'antennes à patches, permet de procéder à des groupements en sous-réseaux. L'utilisation d'antennes de réception avec un seul lobe de détection en élévation permet de simplifier l'installation du système sur l'aéronef. En effet, dans des bandes basses de fréquences, afin de conférer au dispositif radar un gain et une directivité suffisants, il faut une surface d'antenne importante, rendant impossible l'implantation sur un drone de petite ou moyenne taille. L'utilisation d'antennes à large lobe, typiquement de 20° en élévation, mais aussi l'intégration de plusieurs antennes identiques sur la peau de l'aéronef, distribuées en horizontal autour de la structure de l'aéronef, permet une implantation compatible des petits drones.

L'émission peut par exemple être effectuée par un réseau qui n'est pas directif en azimut mais qui est directif en élévation. L'implantation d'un tel système est rendue possible par la faible hauteur des antennes de réception permettant une couverture globale du volume à surveiller.

De la manière décrite ci-dessus en référence à la figure 2b, l'émission peut être obtenue par deux ou plus faisceaux en élévation ; qui peuvent couvrir, de manière typique, 110° en azimut.

La discrimination spatiale finale peut être obtenue à l'intersection des lobes en émission et en réception. Il est par exemple possible de choisir une première fréquence d'émission F1 dans le premier faisceau en réception 210, et une fréquence F2 dans le second faisceau en réception 211, toujours en référence à la figure 2b. Ainsi, une cible peut être détectée dans plusieurs faisceaux de réception. En entrelaçant temporellement les émissions aux fréquences F1 et F2 il est alors par exemple possible de procéder à une goniométrie d'amplitude en élévation ou à un traitement mono-impulsion. De cette manière il est possible de localiser précisément les cibles. Il est à noter que dans cet exemple, les émissions sont réalisées sur deux fréquences et sur deux faisceaux en élévation, mais qu'il est possible en tant que de besoin, d'émettre sur une pluralité de fréquences et/ou une pluralité de faisceaux en élévation.

En ce qui concerne la découpe en azimut des réseaux antennaires, celle-ci peut se faire soit pas FFC en installant un récepteur derrière chaque module de réception 411, ou par des jeux de commutateurs hyperfréquences permettant un balayage électronique sur les différents axes en ne prenant en compte que les faisceaux adjacents qui contribuent à la réception de l'écho.

Avantageusement, il est possible de procéder à une émission colorée, ainsi l'utilisation de formation de faisceau par le calcul en réception, associée à l'émission colorée, permet d'ajuster les faisceaux d'antenne de façon dynamique en fonction du contexte et des besoins opérationnels.

Egalement, les dimensions des faisceaux d'antennes peuvent être ajustées en fonction des besoins, de manière à optimiser le nombre de modules d'antennes de réception.

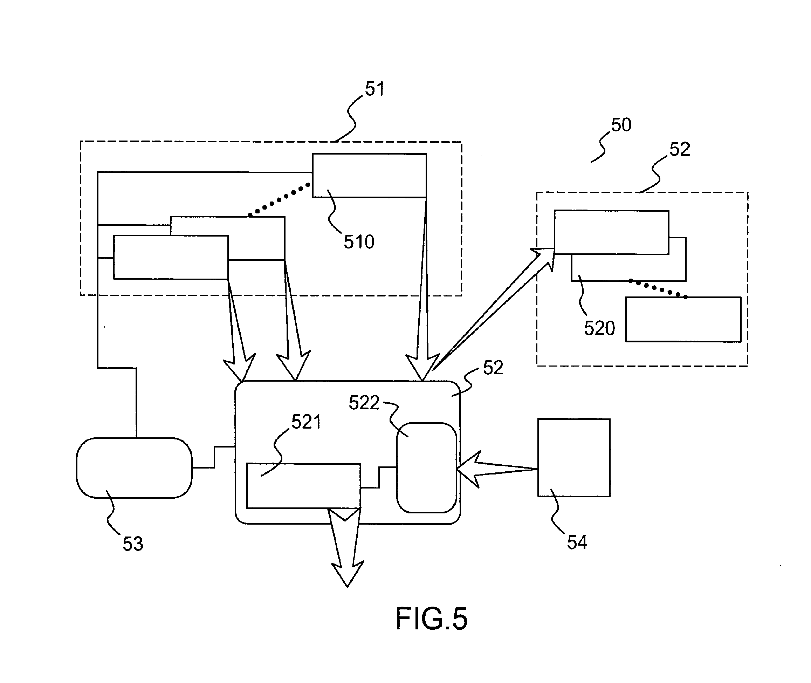

La figure 5 présente un diagramme illustrant l'architecture globale d'un dispositif radar multifonction selon un exemple de réalisation de l'invention.

Une architecture de dispositif radar 50 selon un exemple de réalisation de l'invention, peut comprendre une antenne de réception 51, comprenant un réseau d'une pluralité de modules d'antennes de réception 510. L'architecture de dispositif radar 50 comprend également une antenne d'émission 52, comprenant une pluralité de modules d'antennes d'émission 520.

L'architecture de dispositif radar 50 comprend en outre des moyens de traitement radar 52 recevant les signaux en provenance des modules d'antennes de réception 510, communicant des signaux aux modules d'antennes d'émission 520, et produisant les informations utiles à la fonctionnalité de "Sense and Avoid". Les signaux en provenance des antennes de réception peuvent être amplifiés et filtrés par des moyens appropriés non représentés. Les informations utiles à la fonctionnalité de "Sense and Avoid" peuvent par exemple être communiquées, via des moyens radioélectriques, des dispositifs de type ADS-B, ou encore des moyens de liaison de type Datalink, vers des centres de contrôle du trafic aérien ou les stations au sol. La publication des données au format ADS-B par exemple, permet de globaliser les informations en utilisant des moyens existants. Les informations peuvent être transmises par la liaison de données système des aéronefs puis être expédiées par Internet ou tout autre moyen de communication aux centres de contrôle. En cas de défaillance des liaisons ou d'absence de retour de l'information transmise dans les messages ADS-B publiés, une liaison par phonie en synthèse vocale sur les lignes usuellement attribuées par les contrôleurs aériens peut être utilisée. Ces centres de contrôle du trafic aérien, ou ATC selon le sigle anglais, peuvent mettre en oeuvre des procédures d'évitement selon des dispositifs en eux-mêmes connus, tels que le TCAS ou le T2CAS.

Les informations produites, restituées en sortie des moyens de traitement radar 52 comprennent : les pistes pertinentes, les données sur les cibles passives, sur les cibles actives, les résultats d'associations éventuelles entre cibles passives et cibles actives, les données concernant les temps de réaction requis, les prédictions de collisions et les points de collision et angles de collision y correspondant, les nuages détectés en avant de l'aéronef 1, l'altitude calculée, la détection d'oiseaux à proximité de l'aéronef 1, etc.

Les moyens de traitement radar 52 peuvent avantageusement recevoir des données 54 relatives à l'aéronef dans lequel l'architecture de dispositif radar 50 est embarquée. Ces données peuvent par exemple comprendre des données d'altitude, d'attitude - c'est-à-dire des données relatives aux positions des gouvernes commandant le roulis, le tangage et le lacet -, de vitesse et de position. Ces données peuvent provenir d'une centrale inertielle de l'aéronef 1 et/ou de divers capteurs et instruments de bord.

Avantageusement, les moyens de traitement radar 52 peuvent comprendre une boîte à outils 521 générant les informations de sortie précitées, utiles à la fonctionnalité de "Sense and Avoid", et une matrice de décision, recevant les données 54 relatives à l'aéronef 1, et les mettant en forme pour les envoyer en entrée de la boîte à outils 521.

Les moyens de traitement radar 52 peuvent également commander des moyens de génération de forme d'onde et de sélection de fréquence 53 permettant la mise en forme des faisceaux d'antenne à la réception. Les moyens de génération de forme d'onde et de sélection de fréquence 53 permettent notamment de réaliser la FFC. Par exemple, les moyens de génération de forme d'onde et de sélection de fréquence 53 peuvent, en fonction de l'altitude de l'aéronef, modifier la sélectivité angulaire sur les faisceaux de réception, et réaliser une FFC comprenant plus ou moins de sous-réseaux.

Avantageusement, les moyens de traitement radar 52 peuvent être programmés dynamiquement en fonction des données 54 relatives à l'aéronef 1. Les données 54 relatives à l'aéronef permettent de la sorte au dispositif radar 50 de fonctionner de manière auto-adaptative, renforçant ainsi la sécurité du dispositif radar 50.

Avantageusement, un dispositif radar selon la présente invention peut fonctionner en bande X. En effet, la bande X offre l'avantage d'une faible absorption atmosphérique. De plus, la bande X permet un dimensionnement des antennes offrant un bon compromis, permet la formation de pinceaux fins, et fait partie des bandes autorisées pour les applications possibles de l'invention. En outre, l'utilisation de la bande X permet avantageusement d'employer, pendant des fenêtres temporelles prévues à cet effet, le dispositif radar selon la présente invention comme un radar météorologique, et de détecter ainsi, par exemple, la présence de nuages situés en avant de l'aéronef 1.

La figure 6 présente un diagramme illustrant une méthode de détermination de pistes présentant un risque de collision.

A un instant initial $t_0$ l'aéronef est à une position $P(t_0)$ et son vecteur vitesse est $\overrightarrow{Vp}(t_0)$. Une cible est à une position $I(t_0)$ et son vecteur vitesse est $\overrightarrow{Vi}(t_0)$. Les conditions de collision entre l'aéronef et la cible nécessaires peuvent être résumées à l'inclusion du segment PI dans un plan de collision défini par les vecteurs $\overrightarrow{Vp}$ et $\overrightarrow{Vi}$. Soient $\psi$ l'angle formé entre le segment $[P(t_0)I(t_0)]$ et le vecteur $\overrightarrow{Vp}(t_0)$ et $\beta$ l'angle formé entre le segment $[P(t_0)I(t_0)]$ et le vecteur $\overrightarrow{Vi}(t_0)$.

Les conditions suffisantes peuvent alors s'écrire, en utilisant le théorème de Thales, suivant la relation :

$$Vp(t).\sin\psi(t) = Vi(t).\sin\beta(t) \qquad\qquad (1)$$

Si les vecteurs $\overrightarrow{Vp}$ et $\overrightarrow{Vi}$ sont supposés constants dans le temps, ainsi que $\psi$ et $\beta$, alors la condition exprimée par la relation (1) se résume à :

$$\frac{d\psi}{dr} = 0 \quad \frac{dV_{RR}}{dr} \quad ou \quad \frac{d\psi}{dt} = 0 \quad \frac{dV_{RR}}{dt} = 0 \quad (2),$$

r étant la distance entre les positions P et I,
$V_{RR}$ étant la vitesse radiale de ralliement ou encore la vitesse Doppler différentielle.

Il est bien sûr nécessaire de tenir compte de la quasi-collision, qui correspond au croisement de deux aéronefs dans leurs sphères de sécurité. Cette condition correspond par exemple à tester la valeur absolue de la dérivée de la relation (2) ci-dessus, c'est-à-dire les dérivées secondes, et de les comparer à un seuil, qui dépend de la zone de sécurité considérée.

Ainsi que cela est décrit précédemment en référence à la figure 3, les plots peuvent être caractérisés et classifiés en fonction des angles d'arrivée et des vitesses Doppler mesurés. En outre, les plots qui ne figurent pas dans le plan de collision peuvent être caractérisés et classifiés en :

- pistes non considérées, par exemple pour les pistes s'éloignant de l'aéronef 1, ou bien les pistes dont la composante de vitesse selon un axe perpendiculaire à l'axe principal de l'aéronef 1 est nulle,
- pistes lointaines, c'est-à-dire les pistes dont la distance depuis l'aéronef 1 est supérieure à un seuil déterminé. Pour de telles pistes, il est par exemple possible que des informations les concernant soient envoyées à un centre de contrôle du trafic aérien ou ATC, qu'une décision soit alors prise au niveau de l'ATC, et envoyée en retour à l'aéronef 1,
- pistes proches, dont la trajectoire croise la trajectoire de l'aéronef 1, qui permettent une intervention de l'opérateur du drone mais qui doivent être traitées avant de nécessiter une réaction automatique d'évitement, c'est-à-dire avant qu'elles ne pénètrent dans la sphère de sécurité de l'aéronef,
- pistes requérant une réaction immédiate, c'est-à-dire impliquant une boucle de réaction de confirmation trop importante, ou bien pour lesquelles le temps de réaction est dépassé, et qui par conséquent imposent un déroutement automatique.

Avantageusement, un dispositif radar selon la présente invention peut exploiter les informations provenant de radars météorologiques aéroportés équipant typiquement les avions de ligne. En effet, il est possible, pendant une fenêtre temporelle durant typiquement quelques millisecondes, d'accorder la fréquence de réception du dispositif radar sur la fréquence allouée aux dispositifs de radars météorologiques aéroportés, fonctionnant également en bande X, les modules d'antenne fonctionnant alors en mode passif. Une détection de type ESM (Electronic support measure), sigle correspondant aux détecteurs de radar, peut alors être réalisée, pour permettre une détection de la direction d'arrivée des signaux provenant des radars météorologiques, et des temps d'arrivée. Un croisement des coordonnées ainsi déterminées peut alors être réalisé avec les coordonnées de pistes détectées par le radar équipant l'aéronef, et le traitement de pistage peut réaliser des associations de pistes en conséquence. Il est à observer que la détection des radars météorologiques aéroportés, émettant des signaux de forte puissance, se fait avec une portée plus longue que celle du dispositif radar équipant l'aéronef, et permettant la mise en oeuvre de la fonctionnalité de "Sense and Avoid". Ainsi, une localisation par défilement et une caractérisation de l'évolution de l'angle d'arrivée permettent d'alléger la tâche de traitement par les moyens de traitement radar 52, en discriminant les informations ne concernant pas directement la fonctionnalité de "Sense and Avoid", par exemple en éliminant les détections latérales évoluant vers l'arrière de l'aéronef.

Egalement, la détection des radars météorologiques peut permettre la détection de défaillances de modules d'antennes. Il est en effet possible de comparer les valeurs théoriques des signaux reçus par les différents modules d'antennes de réception 510, correspondant aux aéronefs équipés de radars météorologiques aéroportés détectés, avec les valeurs réellement mesurées, et de diagnostiquer une défaillance d'un module d'antenne de réception 510 dans le cas où la différence entre les valeurs théoriques et mesurées dépasse un seuil déterminé.

Avantageusement, un dispositif radar selon la présente invention peut comprendre un canal de réception dédié à la détection de radars aéroportés météorologiques, et accordé sur la fréquence d'émission des radars de ce type. De la sorte, il n'est pas nécessaire de dégager une fenêtre temporelle pour la détection de radars météorologiques de la manière décrite ci-dessus, et la détection des radars météorologiques peut alors se faire en parallèle.

Avantageusement, il est également possible d'émettre un signal d'écho de réponse, à la réception d'un signal provenant d'un radar météorologique aéroporté, afin de signaler à l'aéronef qui en est équipé, de la présence de l'aéronef.

Avantageusement, il est possible d'utiliser la fonction d'évitement d'obstacles fixes, communément désignée par la terminologie anglaise « ground avoidance », dans le but de consolider des informations de sol synthétiques téléchargées dans l'aéronef. De la sorte, il est possible de permettre un vol autonome de l'aéronef sans le recours à un dispositif de géo-localisation par satellite, ni de liaison de données.

Avantageusement, il est également possible de mettre en oeuvre une fonction d'altimétrie basée sur le dispositif radar aéroporté selon l'invention. Il est par exemple possible de réaliser la formation de trois faisceaux (ou plus) orientés par exemple à 30° les uns des autres et sensiblement vers le bas de l'aéronef, de manière à permettre de prendre en compte la mesure du retour de sol. La mesure des distances, une fois les angles de mesure connus (par une connaissance de la configuration de l'implantation physique des différents éléments et par la connaissance de l'attitude de l'aéronef), permet de connaître la hauteur de l'avion par rapport au sol.

Avantageusement encore, une fonction de mesure de la vitesse de l'aéronef par rapport au sol, via une analyse par le dispositif radar aéroporté selon l'invention, de la vitesse moyenne du sol, peut permettre une hybridation de la fonction de navigation à l'aide de la mesure de vitesse sol. Une telle solution est beaucoup plus performante qu'une solution d'hybridation connue se basant sur la vitesse par rapport à l'air. De la sorte, il est également possible de réduire à son minimum la performance requise de la centrale inertielle primaire ou de secours de l'aéronef, et ainsi optimiser le poids global de l'aéronef, ce qui peut être particulièrement avantageux lorsque l'aéronef est un drone.

Il est maintenant décrit des exemples typiques de fonctions réalisées par un dispositif radar aéroporté selon la présente invention :

- Un pistage de l'aéronef porteur peut être réalisé par le dispositif radar aéroporté, et ce pistage détermine la trajectoire à suivre pour un évitement, en tenant compte de la trajectoire initiale de l'aéronef.
- Une situation tactique ordonnée des conflits potentiels peut être élaborée, permettant de commander en cas d'urgence un dispositif d'évitement embarqué pour les cibles prioritaires, et d'envoyer toutes les données ne nécessitant pas de réaction d'urgence vers des dispositifs de T2CAS.
- Avantageusement, un dispositif basé sur des capteurs optiques peut être commandé par la détection Doppler du dispositif radar aéroporté, afin que ledit dispositif de traitement optique confirme des détections et infirmes d'éventuelles fausses détections. Le dispositif de traitement optique peut par exemple comprendre un ensemble de caméras électro-optiques et/ou infrarouges, ou encore la boule optronique de l'aéronef si celui-ci en est équipé.
- Avantageusement encore, un dispositif de détection acoustique peut également être commandé par le dispositif radar aéroporté, afin de former des faisceaux directifs vers les cibles détectées. Le dispositif de détection acoustique peut par exemple être basé sur une pluralité de microphones omnidirectionnels. Un tel dispositif de détection acoustique connu de l'état de la technique est par exemple décrit dans l'article intitulé "A simple procedure for tracking fast maneuvering aircraft using spatially distributed acoustic sensors" (Dommermuth F.M., The Journal of the Acoustical Society of America 1987, vol. 82, n°4, pp 1418-1424). Un traitement amplitude / phase en parallèle peut alors être appliqué, une formation de faisceaux par le calcul et/ou un traitement goniométrique permet alors de déterminer la direction des cibles. Une localisation des cibles par défilement et une fusion des pistes détectées par les différents dispositifs peut être réalisée. L'azimut des plots « sonores » et des plots radar doit être identique dans le volume d'imprécision.

- Toutes les données sur les cibles restituées par les moyens de traitement radar 52 peuvent être utilisées pour alimenter un dispositif de type TCAS ou T2CAS, de la même manière que s'il s'agissait de données en provenance des transpondeurs desdites cibles. Ainsi, la fonction d'évitement, ou "Avoid", du dispositif de type TCAS ou T2CAS peut être réutilisée sans recours à du matériel supplémentaire, et avec des compléments de certification mineurs. Cette fonction peut-être étendue à l'évitement des plots non coopératifs en intégrant les nouvelles pistes sous la forme normalisée des pistes coopératives. Une modification des systèmes existants pour permettre cette intégration peut être envisagée.

- Un message préenregistré ou généré par des moyens de synthèse vocale, peut être émis via le dispositif de radio de l'aéronef, en cas de manoeuvre d'évitement. Le message peut pas exemple contenir les informations relatives à la position relative de l'aéronef par rapport à la cible concernée, le type de cible détectée, ainsi que la qualité de l'aéronef (par exemple : un drone). Le message peut également contenir les informations relatives à la manoeuvre réalisé, par exemple : "évitement par la droite", "changement d'altitude", etc. Egalement, la tour de contrôle ou l'ATC peut être prévenue par les moyens usuels, c'est-à-dire par le transpondeur secondaire, auxquels peut être ajoutée une information quant à la position calculée de la cible détectée. Une confirmation de la position de la cible détectée permet d'enrichir la situation tactique, communément désignée par l'acronyme SITAC, de la station située au sol, si cette dernière est connectée au réseau ATC.

- Avantageusement, les informations fournies par un transpondeur de type ADS-B peuvent être utilisées pour compléter la SITAC. Les pistes détectées par le dispositif radar aéroporté peuvent en effet être associées aux pistes publiées par le système ADS-B. Egalement, la base de données du système ADS-B peut être enrichie par les données de position des cibles détectées en trajectoires potentielles de collision, transmises par le dispositif radar aéroporté selon la présente invention.

Avantageusement, il est possible d'utiliser un dispositif radar aéroporté selon la présente invention, pour la mise en oeuvre d'une fonction d'aide à l'atterrissage ou d'atterrissage automatique de l'aéronef.

Le dispositif radar peut en effet être configuré pour se comporter pendant des fenêtres temporelles déterminées, comme une balise aéroportée existante utilisée dans un système d'atterrissage automatique. Le dispositif radar aéroporté peut par exemple émettre, pendant lesdites fenêtres temporelles, des signaux spécifiques aptes à être exploités par des balises et/ou radars terrestres et/ou être configuré pour recevoir des signaux spécifiques émis par les balises et/ou radars terrestres.

Un premier exemple d'application d'un dispositif radar selon l'invention à une fonction d'aide à l'atterrissage ou d'atterrissage automatique, peut consister à employer le dispositif radar aéroporté comme solution de remplacement, ou encore en redondance, d'une balise radioélectrique aéroportée prévue spécifiquement pour le guidage d'aéronefs. Il existe des balises aéroportées de ce type en elles-mêmes connues de l'état de la technique, fonctionnant conjointement avec un radar au sol. Au moins une balise au sol de position prédéterminée par rapport au radar permet d'affiner la mesure de la distance de l'aéronef au radar, et l'angle d'élévation de l'aéronef par rapport au radar. Un système d'aide à l'atterrissage basé sur cette architecture est par exemple décrit dans la demande de brevet publiée sous la référence PCT/EP 2005055975. Le radar au sol peut permettre la détection et le pistage de cibles dans un cône situé en approche d'une piste d'atterrissage, typiquement défini par des angles de $\pm 20°$ en élévation, et de $\pm 10°$ en azimut. Les données issues du pistage des cibles peuvent alors être communiquées par des moyens radioélectriques, directement par le radar au sol ou par une balise dédiée, jusqu'au dispositif de radar aéroporté, et peuvent également être exploitées, par exemple par les moyens de traitement radar 52, pour affiner le pistage réalisé par le dispositif radar aéroporté, ou encore pour alléger les traitements de discrimination du fouillis de sol dans la zone d'approche de la piste.

Un second exemple d'application d'un dispositif radar selon l'invention à une fonction d'aide à l'atterrissage, peut consister à employer le dispositif radar aéroporté conjointement à une pluralité de balises au sol fournissant une réponse à des signaux spécifiques émis par le dispositif radar, le dispositif radar recueillant alors en retour des signaux. Un système d'aide à l'atterrissage basé sur cette architecture est par exemple décrit dans la demande de brevet européen publiée sous la référence EP 1963942. Il est par exemple possible de disposer au moins une première balise au sol matérialisant le début de la piste ou le point de toucher des roues, et au moins une seconde balise matérialisant la fin de la piste ou le point d'arrêt. Pour chacune des balises précitées, il est possible d'utiliser deux balises situées de part et d'autre de la piste, au niveau des points correspondants. Les balises peuvent répondre en Doppler, et leur écho vis-à-vis du radar aéroporté présente une position fixe. La position relative de ces plots par rapport à la piste d'atterrissage étant connue, il est possible de mesurer la pente de la trajectoire descendante de l'aéronef, et la distance de l'aéronef aux balises. Cette mesure peut être confirmée par triangulation, afin d'assurer le niveau de redondance requis pour une procédure d'atterrissage automatique.

La figure 7 présente, en synoptique, un dispositif d'aide à l'atterrissage ou d'atterrissage automatique fonctionnant conjointement avec un dispositif radar multifonction aéroporté, dans un exemple de réalisation de l'invention correspondant au second exemple d'application décrit ci-dessus.

En référence à la figure 7, quatre balises radioélectriques 71, 72, 73, 74 peuvent être disposées à des endroits déterminés relativement à une piste d'aéroport 70 de longueur D et de largeur L. Pour une configuration de décollage / atterrissage donnée sur la piste d'aéroport 70 dépendant notamment des conditions de vent, les deux premières balises 71, 72 dans l'exemple de la figure, permettent de matérialiser le point d'arrêt. De la même manière, les troisième et quatrième balises 73, 74 permettent la matérialisation du point de toucher T des roues. Les deux paires de balises ainsi formées sont sensiblement espacées de la longueur D. Les première et deuxième balises 71, 72 sont espacées de la largeur L, ainsi que les troisième et quatrième balises 73, 74.

En projection dans le plan principal de l'aéronef 1, les angles entre l'axe principal de l'aéronef 1, et les segments de droites reliant l'aéronef 1 avec respectivement les première, deuxième, troisième et quatrième balises 71, 72, 73, 74 sont notés $\theta_{az1}$, $\theta_{az2}$, $\theta_{az3}$, $\theta_{az4}$. L'angle compris entre l'axe principal de l'aéronef 1 et le segment de droite reliant l'aéronef 1 avec le point de toucher T est noté $\theta_{az}$. De la même manière, en projection dans un plan vertical, les angles entre l'axe principal de l'aéronef 1, et les segments de droites reliant l'aéronef 1 avec respectivement les première, deuxième, troisième et quatrième balises 71, 72, 73, 74 sont notés $\theta_{él1}$, $\theta_{él2}$, $\theta_{él3}$, $\theta_{él4}$.

La mesure par le dispositif radar, des angles $\theta_{az1}$ et $\theta_{az2}$ (et/ou respectivement des angles $\theta_{az3}$ et $\theta_{az4}$), associée à une pesée multiple réalisée par des moyens de traitement radar afin de moyenner les résultats de ces mesures, permet de situer l'aéronef 1 par rapport à la piste d'aéroport 70, en projection dans le plan principal, de l'aéronef. D'une manière similaire, la mesure des angles $\theta_{él1}$ et $\theta_{él3}$ (et/ ou respectivement des angles $\theta_{él2}$ et $\theta_{él4}$) permet de mesurer la pente de descente de l'aéronef, en connaissant également l'attitude de l'aéronef telle que connue par la centrale inertielle.

La mesure de l'évolution des angles précités, alliée à une connaissance des distances des balises 71, 72, 73, 74 les unes relativement aux autres, permet de déterminer la distance de l'aéronef 1 à la piste d'aéroport 70, ainsi que la hauteur de l'aéronef 1 par rapport à la piste d'aéroport 70 (ou plus précisément au plan contenant les balises 71, 72, 73, 74), avec une précision qui augmente comme le carré de l'inverse de cette distance. Les valeurs de distance et de hauteur ainsi déterminées peuvent être tracées et comparées, connaissant la vitesse d'évolution de l'aéronef 1, aux valeurs issues des dispositifs embarqués de navigation, afin de procéder au recalage de ces dernières en vue de l'atterrissage.

Avantageusement, il est possible d'ajouter aux balises 71, 72, 73, 74 dans le second exemple d'application décrit, un radar, afin de procurer au système d'atterrissage automatique un niveau supérieur de redondance.

Il est à observer que c'est la possibilité de reconfigurer dynamiquement les paramètres d'émission et de réception, et notamment la possibilité de reconfigurer les bandes de fréquences et les formes d'ondes, qui permet une utilisation du dispositif radar selon les modes de réalisation de l'invention décrits ci-dessus, pour la réalisation d'une multitude de fonctions.

**Revendications**

**1.** Dispositif radar aéroporté permettant la détection de cibles pour la mise en oeuvre d'une fonctionnalité de détection et évitement d'obstacles (50), comprenant une pluralité de modules d'antennes (41), au moins un module d'antenne (41) comprenant un module d'émission (411, 520), et au moins un module d'antenne (41) comprenant un module de réception (412, 510), les modules d'antennes (41) étant fixes vis-à-vis de l'aéronef (1) disposés en surface de l'aéronef (1), **caractérisé en ce que** le dispositif radar (50) fonctionne en modes actif et passif, les modules d'antennes (41) formant des faisceaux en émission et en réception de largeur et de caractéristiques adaptées à la direction visée.

**2.** Dispositif radar aéroporté (50) selon la revendication 1, **caractérisé en ce que** les modules d'antennes (41, 510, 520) sont conformes à la surface de l'aéronef (1).

**3.** Dispositif radar aéroporté (50) selon l'une quelconque des revendications précédentes, **caractérisé en ce que** les modules d'antennes (41) sont plans.

**4.** Dispositif radar aéroporté (50) selon l'une quelconque des revendications précédentes, **caractérisé en ce que** les modules d'antennes (41) sont disposés sur la peau de l'aéronef (1).

**5.** Dispositif radar aéroporté (50) selon l'une quelconque des revendications précédentes, **caractérisé en ce que** les modules d'antennes (41) sont disposés en dessous de la peau de l'aéronef (1).

**6.** Dispositif radar aéroporté (50) selon l'une quelconque des revendications précédentes, **caractérisé en ce qu'**il fonctionne en bande X, en mode séquentiel ou en mode continu.

**7.** Dispositif radar aéroporté (50) selon l'une quelconque des revendications précédentes, **caractérisé en ce que** les modules d'antennes (41) sont disposés dans un bloc unitaire apte à être fixé au niveau du nez (20) de l'aéronef (1).

**8.** Dispositif radar aéroporté (50) selon l'une des revendications 1 à 5, **caractérisé en ce que** les modules d'antennes (41) sont disposés de manière distribuée au niveau de différentes parties de la surface de l'aéronef (1).

**9.** Dispositif radar aéroporté (50) selon l'une quelconque des revendications précédentes, **caractérisé en ce qu'**il comprend en outre des moyens de traitement (52) recevant des données des modules de réception (412, 510) et envoyant des données traitées aux modules d'émission (411, 520), et produisant des données de pistage des cibles détectées en modes actif et passif.

**10.** Dispositif radar aéroporté (50) selon la revendication 9, **caractérisé en ce que** les moyens de traitement (52) envoient des données aux modules d'émission (411, 520) aptes à former des faisceaux différant selon différentes zones angulaire de détection définies en proximité de l'aéronef (1).

**11.** Dispositif radar aéroporté (50) selon l'une quelconque des revendications précédentes, **caractérisé en ce qu'**il est apte à être employé comme un radar météorologique pendant des fenêtres temporelles déterminées.

**12.** Dispositif radar aéroporté (50) selon l'une quelconque des revendications 9 à 11, **caractérisé en ce que** les moyens de traitement (52) reçoivent en outre des données (54) relatives à l'aéronef (1) comprenant des informations relatives à son altitude, sa vitesse et/ou son attitude, exploitées dynamiquement par les moyens de traitement (52).

**13.** Dispositif radar aéroporté (50) selon la revendication 12, **caractérisé en ce qu'**une première zone angulaire de détection (31) est définie en avant de l'aéronef (1), par une ouverture angulaire a de part et d'autre de l'axe principal de l'aéronef (1) dans le plan principal de l'aéronef (1), une deuxième zone angulaire de détection (32) étant définie par une représentation dans le plan principal de l'aéronef (1) s'étendant depuis la limite de ladite première zone de détection jusqu'à la perpendiculaire à l'axe principal de l'aéronef (1), une troisième zone angulaire de détection (33) s'étendant sensiblement en arrière de l'aéronef (1) depuis la limite de ladite deuxième zone angulaire de détection (32).

**14.** Dispositif radar aéroporté (50) selon l'une quelconque des revendications 9 à 13, **caractérisé en ce que** les moyens de traitement (52) font varier dynamiquement la forme de l'onde d'émission, les temps d'intégration, et/ou les modules d'antennes (510, 520) utilisés en fonction des données (54) relatives à l'aéronef (1).

**15.** Dispositif radar aéroporté (50) selon l'une quelconque des revendications 9 à 14, **caractérisé en ce que** les moyens de traitement (52) produisent une fenêtre temporelle pendant laquelle le dispositif radar aéroporté (52) est accordé sur la fréquence des radars météorologiques aéroportés, permettant leur détection.

**16.** Dispositif radar aéroporté (50) selon l'une quelconque des revendications 9 à 15, **caractérisé en ce que** les moyens de traitement (52) sont aptes à détecter la défaillance d'un module d'antenne (41) et à modifier le cas échéant les faisceaux formés par les modules d'antennes (41) adjacents de manière à compenser la perte de détection occasionnée.

**17.** Dispositif radar aéroporté (50) selon l'une quelconque des revendications 9 à 16, **caractérisé en ce que** les moyens de traitement (52) comprennent une boîte à outils (521) générant les données relatives à la fonctionnalité de détection et évitement, comprenant les pistes filtrées, les cibles passives détectées, les détections de radars météorologiques aéroportés, les associations de cibles, les temps de réaction requis, les points et angles de collision prédits, les détections de nuages frontaux, l'altitude calculée de l'aéronef (1) et/ou les détections frontales d'oiseaux.

**18.** Dispositif radar aéroporté (50) selon l'une quelconque des revendications 16 et 17, **caractérisé en ce qu'**il est apte à commander un dispositif d'évitement embarqué dans l'aéronef (1).

**19.** Système d'atterrissage automatique pour aéronef (1), comprenant un dispositif radar aéroporté (50) selon l'une quelconque des revendications précédentes, et au moins une balise radioélectrique au sol (71) à proximité d'une piste d'aéroport (70), **caractérisé en ce que** le dispositif radar aéroporté est configuré pendant des fenêtres temporelles déterminées, pour émettre et/ou recevoir des signaux spécifiques respectivement à destination et/ou en provenance des balises radioélectriques au sol (71).

**Patentansprüche**

**1.** Luftfahrzeug-Radarvorrichtung zum Erkennen von Zielen zum Implementieren einer Funktionalität des Erkennens und Vermeidens von Hindernissen (50), umfassend mehrere Antennenmodule (41), wobei wenigstens ein Antennenmodul (41) ein Sendemodul (411, 520) umfasst und wenigstens ein Antennenmodul (41) ein Empfangsmodul (412, 510) umfasst, wobei die Antennenmodule (41) relativ zu dem Luftfahrzeug (1) an einer Fläche des Luftfahrzeugs (1) befestigt sind, **dadurch gekennzeichnet, dass** die Radarvorrichtung (50) im aktiven und passiven Modus arbeitet, wobei die Antennenmodule (41) Sende- und Empfangsstrahlen mit einer Breite und mit Charakteristiken bilden, die an die vorgesehene Richtung angepasst sind.

**2.** Luftfahrzeug-Radarvorrichtung (50) nach Anspruch 1, **dadurch gekennzeichnet, dass** die Antennenmodule (41, 510, 520) der Oberfläche des Luftfahrzeugs (1) entsprechen.

**3.** Luftfahrzeug-Radarvorrichtung (50) nach einem der vorherigen Ansprüche, **dadurch gekennzeichnet, dass** die Antennenmodule (41) eben sind.

**4.** Luftfahrzeug-Radarvorrichtung (50) nach einem der vorherigen Ansprüche, **dadurch gekennzeichnet, dass** die Antennenmodule (41) auf der Haut des Luftfahrzeugs (1) angeordnet sind.

**5.** Luftfahrzeug-Radarvorrichtung (50) nach einem der vorherigen Ansprüche, **dadurch gekennzeichnet, dass** die Antennenmodule (41) unterhalb der Haut des Luftfahrzeugs (1) angeordnet sind.

**6.** Luftfahrzeug-Radarvorrichtung (50) nach einem der vorherigen Ansprüche, **dadurch gekennzeichnet, dass** sie im X-Band, im sequentiellen Modus oder im kontinuierlichen Modus arbeitet.

**7.** Luftfahrzeug-Radarvorrichtung (50) nach einem der vorherigen Ansprüche, **dadurch gekennzeichnet, dass** die Antennenmodule (41) in einem Einheitsblock angeordnet sind, der an der Nase (20) des Luftfahrzeugs (1) befestigt werden kann.

**8.** Luftfahrzeug-Radarvorrichtung (50) nach einem der Ansprüche 1 bis 5, **dadurch gekennzeichnet, dass** die Antennenmodule (41) über verschiedene Teile der Oberfläche des Luftfahrzeugs (1) verteilt angeordnet sind.

**9.** Luftfahrzeug-Radarvorrichtung (50) nach einem der vorherigen Ansprüche, **dadurch gekennzeichnet, dass** sie ferner Verarbeitungsmittel (52) zum Empfangen von Daten von den Empfangsmodulen (412, 510) und zum Senden von verarbeiteten Daten zu den Sendemodulen (411, 520) und zum Erzeugen von Verfolgungsdaten von im aktiven und passiven Modus erkannten Zielen umfasst.

**10.** Luftfahrzeug-Radarvorrichtung (50) nach Anspruch 9, **dadurch gekennzeichnet, dass** die Verarbeitungsmittel (52) Daten zu den Empfangsmodulen (411, 520) senden, die zur Strahlenbildung ausgelegt sind, welche Strahlen sich gemäß unterschiedlichen Winkelerkennungszonen unterscheiden, die in der Nähe des Luftfahrzeugs (1) definiert werden.

**11.** Luftfahrzeug-Radarvorrichtung (50) nach einem der vorherigen Ansprüche, **dadurch gekennzeichnet, dass** sie ausgelegt ist, um in bestimmten Zeitfenstern als Wetterradar verwendet zu werden.

**12.** Luftfahrzeug-Radarvorrichtung (50) nach einem der Ansprüche 9 bis 11, **dadurch gekennzeichnet, dass** die Verarbeitungsmittel (52) ferner Daten (54) über das Luftfahrzeug (1) empfangen, die Informationen über dessen Höhe, Geschwindigkeit und/oder Lage umfassen, die von den Verarbeitungsmitteln (52) dynamisch genutzt werden.

**13.** Luftfahrzeug-Radarvorrichtung (50) nach Anspruch 12, **dadurch gekennzeichnet, dass** eine erste Erkennungswinkelzone (31) vor dem Luftfahrzeug (1) durch eine Winkelöffnung $\alpha$ auf beiden Seiten der Hauptachse des Luftfahrzeugs (1) in der Hauptebene des Luftfahrzeugs (1) definiert wird, eine zweite Erkennungswinkelzone (32) durch eine Darstellung in der Hauptebene des Luftfahrzeugs (1) definiert wird, die sich von der Grenze der ersten Erkennungszone bis zur Senkrechten zur Hauptachse des Luftfahrzeugs (1) erstreckt, wobei sich eine dritte Erkennungswinkelzone (33) im Wesentlichen hinter dem Luftfahrzeug (1) von der Grenze der zweiten Erkennungswinkelzone (32) erstreckt.

14. Luftfahrzeug-Radarvorrichtung (50) nach einem der Ansprüche 9 bis 13, **dadurch gekennzeichnet, dass** die Verarbeitungsmittel (52) bewirken, dass die Form der Sendewelle, die Integrationszeiten und/oder die verwendeten Antennenmodule (510, 520) in Abhängigkeit von den Daten (54) über das Luftfahrzeug (1) dynamisch variiert werden.

15. Luftfahrzeug-Radarvorrichtung (50) nach einem der Ansprüche 9 bis 14, **dadurch gekennzeichnet, dass** die Verarbeitungsmittel (52) ein Zeitfenster erzeugen, in dem die Luftfahrzeug-Radarvorrichtung (50) auf die Frequenz der Luftfahrzeugwetterradare abgeglichen wird, um deren Erkennung zuzulassen.

16. Luftfahrzeug-Radarvorrichtung (50) nach einem der Ansprüche 9 bis 15, **dadurch gekennzeichnet, dass** die Verarbeitungsmittel (52) zum Erkennen des Ausfalls eines Antennenmoduls (41) und ggf. zum Modifizieren der von den benachbarten Antennenmodulen (41) gebildeten Strahlen ausgelegt sind, um den auftretenden Erkennungsverlusts zu kompensieren.

17. Luftfahrzeug-Radarvorrichtung (50) nach einem der Ansprüche 9 bis 16, **dadurch gekennzeichnet, dass** die Verarbeitungsmittel (52) ein Instrumentengehäuse (521) umfassen, das die Daten über die Erkennungs- und Vermeidungsfunktionalität erzeugt, umfassend filtrierte Spuren, passiv erkannte Ziele, Erkennungen von Luftfahrzeugwetterradaren, Zielassoziationen, benötigte Reaktionszeiten, vorhergesagte Kollisionspunkte und -winkel, Erkennung von frontalen Wolken, berechnete Höhe des Luftfahrzeugs (1) und/oder Erkennung von frontalen Vögeln.

18. Luftfahrzeug-Radarvorrichtung (50) nach einem der Ansprüche 16 und 17, **dadurch gekennzeichnet, dass** sie ausgelegt ist, um eine an Bord des Luftfahrzeugs (1) montierte Umgehungsvorrichtung zu steuern.

19. Automatisches Landesystem für ein Luftfahrzeug (1), das eine Luftfahrzeug-Radarvorrichtung (50) nach einem der vorherigen Ansprüche und wenigstens eine radioelektrische Bake am Boden (71) in der Nähe einer Flughafenlandebahn (70) umfasst, **dadurch gekennzeichnet, dass** die Luftfahrzeug-Radarvorrichtung während vorbestimmter Zeitfenster so konfiguriert ist, dass sie spezielle Signale jeweils zum Ziel senden und/oder von radioelektrischen Baken am Boden (71) empfangen kann.

**Claims**

1. An airborne radar device (50) allowing targets to be detected in order to implement a functionality for sensing and avoiding obstacles, comprising a plurality of antenna modules (41), with at least one antenna module (41) comprising a transmission module (411, 520) and at least one antenna module (41) comprising a reception module (412, 510), said antenna modules (41) being fixed in relation to the aircraft (1) and disposed on the surface of said aircraft (1), **characterised in that** said radar device (50) operates in active and passive modes, said antenna modules (41) forming transmission and reception beams with a width and characteristics that are adapted to the targeted direction.

2. The airborne radar device (50) according to claim 1, **characterised in that** said antenna modules (41, 510, 520) conform to the surface of said aircraft (1).

3. The airborne radar device (50) according to any one of the preceding claims, **characterised in that** said antenna modules (41) are flat.

4. The airborne radar device (50) according to any one of the preceding claims, **characterised in that** said antenna modules (41) are disposed on the skin of said aircraft (1).

5. The airborne radar device (50) according to any one of the preceding claims, **characterised in that** said antenna modules (41) are disposed underneath the skin of said aircraft (1).

6. The airborne radar device (50) according to any one of the preceding claims, **characterised in that** it operates in the X band, in sequential mode or in continuous mode.

**7.** The airborne radar device (50) according to any one of the preceding claims, **characterised in that** said antenna modules (41) are disposed in a unitary block designed to be fixed to the nose (20) of said aircraft (1).

**8.** The airborne radar device (50) according to any one of claims 1 to 5, **characterised in that** said antenna modules (41) are disposed in a distributed way over the various parts of the surface of said aircraft (1).

**9.** The airborne radar device (50) according to any one of the preceding claims, **characterised in that** it further comprises processing means (52) receiving data from said reception modules (412, 510) and sending processed data to said transmission modules (411, 520), and producing tracking data for targets detected in active and passive modes.

**10.** The airborne radar device (50) according to claim 9, **characterised in that** said processing means (52) send data to said transmission modules (411, 520) that are designed to form beams that differ in different angular detection zones defined in the vicinity of said aircraft (1).

**11.** The airborne radar device (50) according to any one of the preceding claims, **characterised in that** it is designed to be used as a meteorological radar within determined time windows.

**12.** The airborne radar device (50) according to any one of claims 9 to 11, **characterised in that** said processing means (52) further receive data (54) relating to said aircraft (1), comprising information relating to its altitude, its speed and/or its attitude, dynamically used by said processing means (52).

**13.** The airborne radar device (50) according to claim 12, **characterised in that** a first angular detection zone (31) is defined in front of said aircraft (1) by an angular aperture $\alpha$ on both sides of the main axis of said aircraft (1) in the main plane of said aircraft (1), with a second angular detection zone (32) being defined by a representation in the main plane of said aircraft (1) extending from the boundary of said first detection zone up to the plane perpendicular to the main axis of said aircraft (1), with a third angular detection zone (33) substantially extending behind said aircraft (1) from the boundary of said second angular detection zone (32).

**14.** The airborne radar device (50) according to any one of claims 9 to 13, **characterised in that** said processing means (52) dynamically vary the shape of the transmission wave, the integration times and/or said antenna modules (510, 520) used as a function of data (54) relating to said aircraft (1).

**15.** The airborne radar device (50) according to any one of claims 9 to 14, **characterised in that** said processing means (52) produce a time window within which said airborne radar device (50) is tuned to the frequency of the airborne meteorological radar, allowing their detection.

**16.** The airborne radar device (50) according to any one of claims 9 to 15, **characterised in that** said processing means (52) are designed to detect the failure of an antenna module (41) and to modify, where necessary, the beams formed by the adjacent antenna modules (41) so as to compensate for the loss of detection that occurs.

**17.** The airborne radar device (50) according to any one of claims 9 to 16, **characterised in that** said processing means (52) comprise a toolbox (521) generating data relating to the sense and avoid functionality, comprising the filtered tracks, the detected passive targets, the detections of airborne meteorological radar, the associations of targets, the required reaction times, the predicted points and angles of collision, the detections of clouds ahead, the calculated altitude of said aircraft (1) and/or the detections of birds ahead.

**18.** The airborne radar device (50) according to claims 16 and 17, **characterised in that** it is designed to control an avoidance device on board said aircraft (1).

**19.** An automatic landing system for aircraft (1), comprising an airborne radar device (50) according to any one of the preceding claims, and at least one ground-based radioelectric beacon (71) in the vicinity of an airport runway (70), **characterised in that** said airborne radar device is configured within determined time windows to transmit and/or receive specific signals, respectively, to and/or from said ground-based radioelectric beacons (71).

FIG.1

FIG.2A

210

211

212

FIG.2B

FIG.3

EP 2 293 101 B1

FIG.4A

FIG.4B

FIG.5

FIG.6

FIG.7

## RÉFÉRENCES CITÉES DANS LA DESCRIPTION

**Documents brevets cités dans la description**

- US 6311108 B
- WO 2008134815 A
- US 4746924 A
- EP 2005055975 W
- EP 1963942 A

**Littérature non-brevet citée dans la description**

- **DOMMERMUTH F.M.** A simple procedure for tracking fast maneuvering aircraft using spatially distributed acoustic sensors. *The Journal of the Acoustical Society of America,* 1987, vol. 82 (4), 1418-1424